# EUROPÄISCHE PATENTANMELDUNG

(11) **EP 1 514 591 A1**
(43) Veröffentlichungstag der Anmeldung: **16.03.2005**
(21) Anmeldenummer: 03020896.1
(22) Anmeldetag: 15.09.2003
(51) Int. Cl.: B01F 5/06, F01N 3/20, B01D 53/79

(54) **Heissgas-Strömungskanal, insbesondere innerhalb einer Abgasanlage eines Verbrennungsmotors stromauf eines Katalysators**

(71) Anmelder: J. Eberspächer GmbH & Co. KG, 73730 Esslingen (DE)
(72) Erfinder: Rudelt, Josef, 73773 Aichwald (DE); Gaiser, Gerd, Dr., 72768 Reutlingen (DE)
(74) Vertreter: Patentanwalts-Partnerschaft, Rotermund + Pfusch + Bernhard

(57) **Zusammenfassung**

Ein Heißgas-Strömungskanal mit einem Strömungsbereich, insbesondere innerhalb einer Abgasanlage eines Verbrennungsmotors stromauf eines Katalysators, zur Vermischung und/oder Verdampfung gas- und/oder flüssigförmiger, in den Heißgasstrom eingebrachter Additive, soll bei einer guten Wirkung auf die angestrebte Vermischung und/oder Verdampfung des eingebrachten Additivs klein bauend und mit möglichst geringem Gewicht ausgebildet sein.

Zu diesem Zweck sind in diesem Strömungsbereich plattförmige Strömungsschikanen (3) vorgesehen, die als Blechlaschen ausgebildet sind, die von einem im Strömungskanal angeordneten Blech (4) abstehen. Das Blech ist erfindungsgemäß ein Blechstreifen (4), der einen rohrförmigen Blecheinsatz (2) bildet und am Innenumfang des Strömungskanals lagernd mit zum Kanalinneren gerichteten Strömungsschikanen (3) angeordnet ist. Desweiteren sind die Blechlaschen (3), welche die Strömungsschikanen (3) bilden, aus dem Blechstreifen (4) zumindest teilweise ausgestanzt und herausgebogen.

## Beschreibung

Die Erfindung betrifft einen Heißgas-Strömungskanal, insbesondere innerhalb einer Abgasanlage eines Verbrennungsmotors stromauf eines Katalysators nach dem Oberbegriff des Patentanspruchs 1.

Bei Verbrennungsmotoren können NOₓ-Emissionen mit Hilfe eines sogenannten SCR-Katalysators (Katalysator mit selektiver katalytischer Reduktion) reduziert werden. Dabei werden in einem derartigen SCR-Katalysator im mageren Abgas Stickoxide mit Ammoniak zu Stickstoff und Wasser bzw. Wasserdampf umgesetzt. Da Ammoniak in Verbrennungsabgasen eines Verbrennungsmotors üblicherweise nicht vorhanden ist, erfolgt stromauf des SCR-Karalysators eine künstliche Anreicherung der Abgase mit Ammoniak. Zweckmäßig erfolgt dies mit Hilfe eines dem SCR-Katalysator vorgeschalteten Hydrolysekatalysators, der Harnstoff in Ammoniak umsetzt. Da die Verbrennungsabgase üblicherweise auch keinen Harnstoff enthalten, muss auch dieser stromauf des Hydrolysekatalysators künstlich in die Abgase eingebracht werden. Dies kann beispielsweise mit Hilfe einer Harnstoffzuführungseinrichtung erfolgen, die stromauf des Hydrolysekatalysators den Harnstoff in Form einer wässrigen Lösung in das Abgas einbringt, insbesondere eindüst. Der Bereich, in dem dieses Einbringen erfolgt, ist bei dem gattungsgemäßen Heißgas-Strömungskanal derjenige Bereich, in dem eine Vermischung und/oder Flüssigkeitsverdampfung erfolgen soll.

Damit sich in dem SCR-Katalysator eine relativ hohe Umsatzrate für die Stickoxide erzielen lässt, ist bereits stromauf des Hydrolysekatalysators eine gute Durchmischung und Verdampfung des Harnstoffs im Abgas erforderlich. Eine derart gute Durchmischung und Verdampfung kann beispielsweise durch eine relativ lange Mischstrecke erzielt werden. In der Praxis besteht allerdings für eine derart lange Mischstrecke in der Regel kein entsprechender Bauraum zur Verfügung. Auch wenn dies der Fall wäre, sind entsprechend lange Strömungskanäle wegen des damit verbundenen Materialverbrauchs und dadurch bedingter Gewichtserhöhung unerwünscht.

Aus der DE 100 60 808 A1 ist eine Abgasanlage für eine Brennkraftmaschine bekannt, die einen SCR-Katalysator und stromauf davon Mittel zur Zufuhr von Harnstoff enthält. Stromauf dieser Harnstoffzuführungsmittel ist eine Mischeinrichtung angeordnet, die aus einem Blech besteht, das senkrecht zur Hauptströmungsrichtung im Abgasrohr angeordnet ist. In das Blech sind gleichmäßig kreisringausschnittförmige Öffnungen eingeschnitten. An der Rückseite dieser Öffnung sind Blechlaschen befestigt, die als Leitschaufeln ausgeführt sind. Mit Hilfe der Mischeinrichtung wird in der Abgasströmung ein Drall erzeugt, der stromab eine effektive Vermischung des eingebrachten Harnstoffs bewirkt.

Die Erfindung beschäftigt sich mit dem Problem, eine günstigere Lösung zu schaffen, bei der eine ausreichend gute Durchmischung und/oder Verdampfung mit einem klein bauenden und möglichst auch gewichtsgeringen Heißgas-Strömungskanal in sicherer und befriedigender Weise erzielt werden kann. Das erfindungsgemäß zu behandelnde Additiv ist nicht auf flüssigen Harnstoff beschränkt, sondern kann beispielsweise insbesondere auch Kraftstoff sein.

Gelöst wird dieses Problem bei einem gattungsgemäßen Heißgas-Strömungskanal durch eine Ausführung nach dem kennzeichnenden Merkmal des Anspruchs 1.

Die Erfindung beruht auf dem allgemeinen Gedanken, das zugegebene Additiv, das inbesondere eine zu verdampfende Flüssigkeit ist, durch Aufprall an den blattförmigen Strömungsschikanen bei der Umsetzung in den Aggregatzustand des Heißgases zu unterstützen. Insbesondere bei einer Umsetzung in den Heißgasaggregatzustand durch Verdampfen sollten die blattförmigen Strömungsschikanen eine gute Wärmeleitfähigkeit besitzen, um Verdampfungswärme abgeben zu können.

Derartige Strömungsschikanen können erfindungsgemäß aus einem Blechstreifen teilweise freigestanzt oder freigeschnitten werden, derart, dass sie mit einem nicht freigeschnittenen bzw. nicht freigestanzten Abschnitt fest mit dem Blechstreifen verbunden bleiben und dort aus der Blechebene heraus gebogen werden können. Desweiteren wird dann aus dem Blechstreifen ein Rohr bzw. ein rohrförmiger Blecheinsatz geformt, der in den Strömungskanal koaxial einführbar ist. Im Strömungskanal liegt dann eine radiale Außenseite des Blecheinsatzes an einer radialen Innenseite des Strömungskanals radial an. Der so gebildete Blecheinsatz kann besonders preiswert hergestellt werden. Die zum Kanalinneren abstehenden Strömungsschikanen erzeugen eine die Durchmischung fördernde Verwirbelung der Heißgasströmung, was die Durchmischung und Verdampfung des jeweiligen Additivs unterstützt. Die Strömungsschikanen sind dabei durch Blechlaschen gebildet, die aus dem Blech ausgestanzt und aus der Blechebene herausgebogen sind.

Zur Erzielung einer Verwirbelung der Strömung durch die blattförmigen Strömungsschikanen ist es vorteilhaft, diese mit Bezug auf die Strömungskanallängsrichtung zu verdrehen. Werden mit Bezug auf eine Stelle in Längsrichtung der Strömungskanalachse sämtliche auf dem dieser Stelle zugeordneten Strömungsumfang liegenden Strömungsschikanen gleichsinnig verdreht, so erhält die Strömung hierdurch einen entsprechenden Drall. Durch stromab liegende Blechlaschen als Strömungsschikanen mit einer vorgenannten Verdrehung mit umgekehrtem Drehsinn entsteht ein gegensinniger Drall, der den stromauf zuvor erzielten Drall praktisch aufhebt.

Es ist möglich, in Strömungsrichtung des Kanales eine Mehrzahl nebeneinander liegender blattförmiger Strömungsschikanen vorzusehen, die umfangsmäßig dabei noch gegeneinander versetzt sein können, wobei von einer Strömungsschikanenreihe zu einer nachfolgender Reihe gleichsinnige oder entgegengerichtete Drallströmungen erzielt werden können. Möglich ist es im Rahmen der Erfindung auch, an einer Stelle längs des Strömungskanales umfangsmäßig blattförmige Strömungsschikanen vorzusehen, die unterschiedliche Verdrehungen gegenüber der Längsrichtung aufweisen.

Besitzt das gebogene Blech eine nach radial außen gerichtete Spannung, so kann eine Fixierung allein durch diese Blechspannung ausreichen. Zweckmäßig wird es allerdings sein, das Blech durch beispielsweise ein Punktschweißen an dem Abgasrohr zu fixieren.

In einem Abgasrohr können in Strömungslängsrichtung mehrere Blechstreifen mit jeweils aus diesen ausgestanzten Blechlaschen als Strömungsschikanen angeordnet sein oder es ist auch möglich, ein längeres Blech mit mehreren in Strömungskanalrichtung nebeneinander liegenden ausgestanzten Blechlaschen einzusetzen.

Wichtig für eine gute Durchmischung bzw. Verdampfung eines insbesondere flüssig eingebrachten Additivs wie insbesondere einer Harnstoffflüssigkeit ist, dass durch die Form und Ausrichtung der einzelnen blattfömigen Schikanen eine gute Strömungsdurchwirbelung erzielt wird.

Weitere wichtige Merkmale und Vorteile ergeben sich aus den einzelnen Unteransprüchen, aus den Zeichnungen sowie der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder alleinstehend verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert.

Es zeigen
- Fig. 1: einen Einsatz aus einem gebogenen Blech mit ausgestanzten blattförmigen Strömungsschikanen für einen Heißgas-Strömungskanal in perspektivischer Ansicht,
- Fig. 2: eine Abwicklung des Bleches des Einsatzes nach Fig. 1,
- Fig. 3: eine Ansicht des Blecheinsatzes nach Fig. 1 auf den Umfang dieses Einsatzes,
- Fig. 4: eine Ansicht auf den Blecheinsatz nach dem Pfeil IV in Fig. 3,
- Fig. 5: einen Schnitt durch den Blecheinsatz nach Linie V-V in Fig. 3.

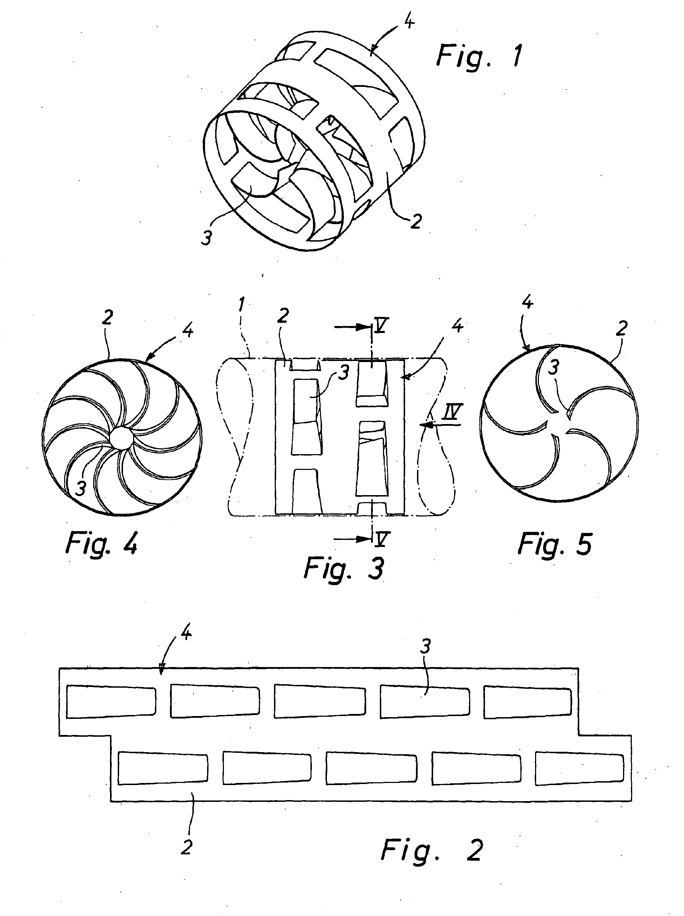

In Fig. 3 ist strichpunktiert ein Abgasrohr 1 einer Abgasanlage eines Verbrennungsmotors angedeutet. Innerhalb dieses Abgasrohres befindet sich ein Blecheinsatz 2. Dieser rohrförmige Blecheinsatz 2 ist hergestellt aus einem in der Fig. 2 dargestellten blattförmigen Blech oder Blechstreifen 4, der eine Abwicklung des Blecheinsatzes 2 darstellt. Aus dem Blech 4 des Blecheinsatzes 2 sind einzelne blattförmige Laschen 3 als Strömungsschikanen ausgestanzt und aus der Blechebene heraus gebogen und beispielsweise in Achsrichtung des Blecheinsatzes 2 auf zwei Reihen verteilt. Herausgebogen aus der Blechebene sind die Laschen 3 mit Bezug auf den Umfang des Blecheinsatzes 2 um beispielsweise 30°. Obwohl dieser Winkel sich als besonders zweckmäßig erwiesen hat, sind selbstverständlich beliebige andere Winkel im Sinne der Erfindung ebenfalls möglich. Bei dem gezeichneten Beispiel ist der Blecheinsatz 2 aus einem Blech 4 geformt, bei dem zwei in Achsrichtung des Blecheinsatzes 2 nebeneinander liegende Reihen an ausgestanzten Laschen 3 vorgesehen sind. Es können auch Bleche 4 verwendet werden mit nur einer oder auch jeder beliebigen Vielzahl an nebeneinander ausgestanzten Laschen 3.

Die Laschen 3 sind bei dem gezeichneten Ausführungsbeispiel in Umfangsrichtung jeweils in gleicher Richtung aus dem Blech 4 herausgestanzt und dementsprechend herausgebogen. Anders ausgedrückt sind die Laschen 3 jeweils in gleicher Richtung zum Kanalinneren hin geneigt, und zwar sämtliche Laschen 3, die hier in zwei in Achsrichtung des Blecheinsatzes 2 liegenden Reihen vorgesehen sind. Außerdem sind die in derselben Reihe angeordneten Laschen 3 jeweils in derselben Weise gekrümmt. Auch die Verdrehung der Laschen 3 gegenüber der Längsachse des Blecheinsatzes 2 ist bei dem gezeichneten Beispiel bei allen in den vorhandenen zwei Reihen vorgesehenen Laschen 3 gleichsinnig vorgenommen. Auf diese Weise wird eine einen solchen Blecheinsatz 2 passierende Strömung in einen gleichsinnigen Drall versetzt.

Durch zwei in Strömungsrichtung hintereinander vorgesehene gegeneinander verdrehte Blecheinsätze 2 werden in der Strömung entgegengerichtete Dralle erzeugt, d.h. der von einer Strömung in einem ersten Einsatz 2 eingenommene Drall wird in einem strömungsmäßig nachfolgenden zweiten Einsatz 2 praktisch durch eine Drall-Umkehrung aufgehoben. Eine gegeneinander verdrehte Ausrichtung zweier Einsätze 2 im vorgenannten Sinne ist gegeben, wenn die Anströmseite eines ersten Einsatzes 2 bei dem nachfolgenden zweiten Einsatz 2 die Abströmseite bildet.

Wie die Ausstanzungen der Laschen 3 in Fig. 2 zeigen, sind diese in den zwei vorgesehenen Laschen-Reihen umfangsmäßig gegeneinander versetzt angeordnet. Diese Anordnung hat sich für eine gute Durchwirbelung als besonders günstig erwiesen. Entsprechend Fig. 4 ist der umfangsmäßig Versatz der Laschen 3 bei den in Längsrichtung des Blecheinsatzes 2 aufeinander folgenden Laschen-Reihen etwa halb so groß gewählt wie der umfangsmäßige Abstand zwischen zwei aufeinander folgenden Laschen 3 innerhalb derselben Laschen-Reihe. Demnach zeigt die Ansicht gemäß Fig. 4 eine doppelte Anzahl an Laschen 3 wie die Ansicht gemäß Fig. 5.

Von besondere Bedeutung ist außerdem, dass die Laschen 3 so dimensioniert, umgebogen und gegebenenfalls gekrümmt und/oder verdreht sind, dass sie sich zwar in Richtung der Kanalmitte erstrecken, einander jedoch nicht berühren. Mit anderen Worten, die Laschen 3 enden radial innen frei bzw. freistehend.

Als Material für einen Blecheinsatz 2 eignet sich insbesondere ein solches mit einer hohen Wärmeleitfähigkeit, damit sich für eine Verdampfung an den Blechlaschen 3 hohe Temperaturen einstellen können. Das Blech 4 ist somit insbesondere ein Metallblech 4.

Desweiteren wird für den Blecheinsatz 2 eine vergleichsweise hohe Wärmebeständigkeit verlangt. Außerdem sollte das Material korrosionsbeständig sein. Vorzugsweise besteht der Blecheinsatz 2 aus einem geeigneten Stahl, insbesondere aus einem Edelstahl.

Mit Bezug auf eine Abgasanlage für einen Verbrennungsmotor befindet sich der in der Zeichnung dargestellte Blecheinsatz 2 stromauf eines einem SCR-Katalysator vorgeschalteten Hydrolysekatalysators, um stromauf des Einsatzes 2 eingesprühten flüssigen Harmstoff vollständig in den Aggregatzustand des Abgases zu überführen, d.h. in einen Zustand, in dem keine Tröpfchenbestandteile mehr vorliegen.

Wie bereits in der allgemeinen Beschreibung erwähnt, kann die erfindungsgemäße Einrichtung für jede Art in einen Heißgasstrom eingebrachter Additive zur Umwandlung in den Aggregatzustand des Heißgases oder einer Vermischung in diesem äußerst vorteilhaft eingesetzt werden.

## Patentansprüche

1. Heißgas-Strömungskanal (1) mit einem Strömungsbereich, insbesondere innerhalb einer Abgasanlage eines Verbrennungsmotors stromauf eines'Katalysators, zur Vermischung und/oder Verdampfung gas- und/oder flüssigförmiger, in den Heißgasstrom eingebrachter Additive, wobei in diesem Strömungsbereich blattförmige Strömungsschikanen (3) vorgesehen sind, die als Blechlaschen ausgebildet sind, die von einem im Strömungskanal (1) angeordneten Blech (4) abstehen,
**dadurch gekennzeichnet,**
- **dass** das Blech ein Blechstreifen (4) ist, der einen rohrförmigen Blecheinsatz (2) bildet und am Innenumfang des Strömungskanals (1) lagernd mit zum Kanalinneren gerichteten Strömungsschikanen (3) angeordnet ist,
- **dass** die die Strömungsschikanen bildenden Blechlaschen (3) aus dem Blechstreifen (4) zumindest teilweise ausgestanzt und herausgebogen sind.

2. Heißgas-Strömungskanal nach Anspruch 1,
**dadurch gekennzeichnet,**
**dass** die blattförmigen Strömungsschikanen (3) aus einem wärmeleitfähigen Material bestehen.

3. Heißgas-Strömungskanal nach Anspruch 1 oder 2,
**dadurch gekennzeichnet,**
**dass** die Blechlaschen (3) jeweils an ihrem vom Kanalinneren enfternten Ende noch einstückig mit dem übrigen Blechstreifen (4) verbunden sind.

4. Heißgas-Strömungskanal nach einem der vorhergehenden Ansprüche,
**dadurch gekennzeichnet,**
**dass** die Blechlaschen (3) radial innen freistehend enden.

5. Heißgas-Strömungskanal nach einem der vorhergehenden Ansprüche,
**dadurch gekennzeichnet,**
**dass** die Strömungsschikanen (3) mit Bezug auf die Kanallängsrichtung verdreht sind.

6. Heißgas-Strömungskanal nach einem der vorhergehenden Ansprüche,
**dadurch gekennzeichnet,**
**dass** in Kanallängsrichtung mehrere nebeneinander liegende Strömungsschikanan (3) vorgesehen sind.

7. Heißgas-Strömungskanal nach einem der vorhergehenden Ansprüche,
**dadurch gekennzeichnet,**
**dass** die mehreren, nebeneinander liegenden Strömungsschikanen (3) in unterschiedliche Umfangsrichtungen verlaufen.

8. Heißgas-Strömungskanal nach einem der vorhergehenden Ansprüche,
**dadurch gekennzeichnet,**
**dass** jeweils an einer Stelle der Kanallängsrichtung vorhandene Strömungsschikanan (3) in einer untereinander gleichen Umfangsrichtung verlaufen.

9. Heißgas-Strömungskanal nach Anspruch 8,
**dadurch gekennzeichnet,**
**dass** auch die Verdrehung der Strömungsschikanen nach Anspruch 5 in einem gleichen Drehsinn gegeben ist.

10. Heißgas-Strömungskanal nach einem der vorhergehenden Ansprüche,
**dadurch gekennzeichnet,**
**dass** in Kanallängsrichtung nebeneinander liegende Strömungsschikanen (3) umfangsmäßig gegeneinander versetzt angeordnet sind.

11. Heißgas-Strömungskanal nach einem der vorhergehenden Ansprüche,
**dadurch gekennzeichnet,**
**dass** das Blech aus Metall oder aus Stahl oder aus Edelstahl besteht.

12. Heißgas-Strömungskanal nach einem der vorhergehenden Ansprüche,
**dadurch gekennzeichnet,**
**dass** das Blech aus einem korrisionsbeständigen und/oder hitzebeständigen Material besteht.
